(19) Europäisches Patentamt / European Patent Office / Office européen des brevets

(11) **EP 4 589 860 A1**

(12) **EUROPEAN PATENT APPLICATION**

(43) Date of publication:
23.07.2025 Bulletin 2025/30

(21) Application number: 25151225.7

(22) Date of filing: 10.01.2025

(51) International Patent Classification (IPC):
*H04B 7/06* $^{(2006.01)}$        *H04B 7/10* $^{(2017.01)}$
*H04B 17/12* $^{(2015.01)}$        *H04B 7/0456* $^{(2017.01)}$

(52) Cooperative Patent Classification (CPC):
**H04B 7/0691; H04B 7/10; H04B 17/12;**
H04B 7/0469

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024  FI 20245044**

(71) Applicant: **Nokia Solutions and Networks Oy 02610 Espoo (FI)**

(72) Inventors:
• **NURMELA, Vuokko Tatjana**
  **Espoo (FI)**
• **SIPILÄ, Kari Petri Juhana**
  **Vantaa (FI)**

(74) Representative: **Nokia EPO representatives Nokia Technologies Oy Karakaari 7 02610 Espoo (FI)**

(54) **CONTROLLING TRANSMISSIONS**

(57)    Apparatuses and methods in a communication system are disclosed. Antenna elements are used for transmitting, elements located in columns with two antennas per column. First transmission (422) having a reference signal utilises a first set of elements, while muting reference signals of other elements. Measurement report comprising first phase offset information regarding the first set of elements is received (426). A second transmission (430) having a reference signal utilises a second set of elements located in different columns while muting reference signals of the transmissions of other elements. Measurement report comprising second phase offset information regarding the second set of elements is received (432). Differentials are calculated between the phase offset informations and the phase offsets adjusted (434) of the transmissions to be similar by applying a phase shift correction based on the differentials.

FIG. 4B

## Description

### Field

The exemplary and non-limiting embodiments of the invention relate generally to wireless communication systems. Embodiments of the invention relate especially to apparatuses and methods in wireless communication networks.

### Background

Wireless telecommunication systems are under constant development. There is a constant need for higher data rates and high quality of service. One way of increasing data rate, an enhancing communication quality and improving capacity is using beam-based transmission in base stations or access nodes. A base station or an access node may transmit to the terminal devices in its coverage area by utilising a beamforming technique, where it transmits signals to the terminal devices via one or more beams. The beams may have at least partly different coverage areas.

Typically, the beams are created by phasing the transmitted signals and transmitting the signals via antenna arrays comprising antenna elements.

### Summary

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided an apparatus in a communication system, comprising: a processor; and a memory including instructions, the instructions, when executed by the processor, cause the apparatus to: control a given number of antenna elements for transmitting to a terminal device, the antenna elements being located in a given number of columns with two antennas per column; select two antenna elements located in different columns as a first set of antenna elements; transmit to the terminal device a first transmission utilising the first set of antenna elements, the transmission comprising a reference signal while muting reference signals of the transmissions of other antenna elements; receive a measurement report from the terminal device, the measurement report comprising first phase offset information regarding the first set of antenna elements; select two antenna elements of the given number of antenna elements located in different columns as a second set of antenna elements; transmit to a terminal device a second transmission utilising the second set of antenna elements, the transmission comprising a reference signal while muting reference signals of the transmissions of other antenna elements; receive a measurement report from the terminal device, the measurement report comprising second phase offset information regarding the second set of antenna elements; calculate differentials between the obtained phase offset information and determine and adjust the phase offsets of the transmissions to be similar by applying a phase shift correction to an antenna of the second set of antenna elements based on the differentials; perform the above transmitting, muting, receiving, calculating and adjusting the sets of antenna elements one at a time.

According to an aspect of the present invention, there is provided a method in an apparatus in a communication system comprising the steps of: controlling a given number of antenna elements for transmitting to a terminal device, the antenna elements being located in a given number of columns with two antennas per column; selecting two antenna elements located in different columns as a first set of antenna elements; transmitting to the terminal device a first transmission utilising the first set of antenna elements, the transmission comprising a reference signal while muting reference signals of the transmissions of other antenna elements; receiving a measurement report from the terminal device, the measurement report comprising first phase offset information regarding the first set of antenna elements; selecting two antenna elements of the given number of antenna elements located in different columns as a second set of antenna elements; transmit to a terminal device a second transmission utilising the second set of antenna elements, the transmission comprising a reference signal while muting reference signals of the transmissions of other antenna elements; receiving a measurement report from the terminal device, the measurement report comprising second phase offset information regarding the second set of antenna elements; calculating differentials between the obtained phase offset information and determine and adjust a phase shift correction of an antenna of the second set of antenna elements based on the differentials; performing the above transmitting, muting, receiving, calculating and adjusting the sets of antenna elements one at a time.

According to an aspect of the present invention, there is provided a computer program comprising instructions, which, when executed by an apparatus, cause the apparatus to perform at least the following: controlling a given number of antenna elements for transmitting to a terminal device, the antenna elements being located in a given number of columns with two antennas per column; selecting two antenna elements located in different columns as a first set of antenna elements; transmitting to the terminal device a first transmission utilising the first set of antenna elements, the transmission comprising a reference signal while muting reference signals of the transmissions of other antenna elements; receiving a measurement report from the terminal device, the measurement report comprising first phase offset information regarding the first set of antenna elements; selecting two antenna elements of the given number of antenna elements located in different columns as a second set of antenna elements; transmit to a terminal device a second transmission utilising the second set of antenna elements, the transmission comprising a reference signal while muting reference signals of the transmissions of other antenna elements; receiving a measurement report from the terminal device, the measurement report comprising second phase offset information regarding the second set of antenna elements; calculating differentials between the obtained phase offset information and determine and adjust a phase shift correction of an antenna of the second set of antenna elements based on the differentials; performing the above transmitting, muting, receiving, calculating and adjusting the sets of antenna elements one at a time.

In an embodiment, there is provided an apparatus comprising means for controlling a given number of antenna elements for transmitting to a terminal device, the antenna elements being located in a given number of columns with two antennas per column; means for selecting two antenna elements located in different columns as a first set of antenna elements; means for transmitting to the terminal device a first transmission utilising the first set of antenna elements, the transmission comprising a reference signal while muting reference signals of the transmissions of other antenna elements; means for receiving a measurement report from the terminal device, the measurement report comprising first phase offset information regarding the first set of antenna elements; means for selecting two antenna elements of the given number of antenna elements located in different columns as a second set of antenna elements; transmit to a terminal device a second transmission utilising the second set of antenna elements, the transmission comprising a reference signal while muting reference signals of the transmissions of other antenna elements; means for receiving a measurement report from the terminal device, the measurement report comprising second phase offset information regarding the second set of antenna elements; means for calculating differentials between the obtained phase offset information and determine and adjust a phase shift correction of an antenna of the second set of antenna elements based on the differentials; and means for performing the above transmitting, muting, receiving, calculating and adjusting the sets of antenna elements one at a time.

One or more examples of implementations are set forth in more detail in the accompanying drawings and the description below. Other features will be apparent from the description and drawings, and from the claims. The embodiments and/or examples and features, if any, described in this specification that do not fall under the scope of the independent claims are to be interpreted as examples useful for understanding various embodiments of the invention.

### List of drawings

Embodiments of the present invention are described below, by way of example only, with reference to the accompanying drawings, in which

Figures 1 and 2 illustrate examples of simplified system architecture of a communication system,
Figures 3A, 3B and 3C illustrate examples of beam patterns of an antenna element,
Figures 4A and 4B are flowcharts illustrating some embodiments,
Figures 5A and 5B illustrate simple examples of systems with four and eight transmission antennas,
Figures 6A, 6B and 6C illustrate simplified examples of apparatuses applying some embodiments of the invention and
Figures 7A, 7B, 7C, 7D, 7E and 7F illustrate examples of calculations with eight transmission antennas.

### Description of some embodiments

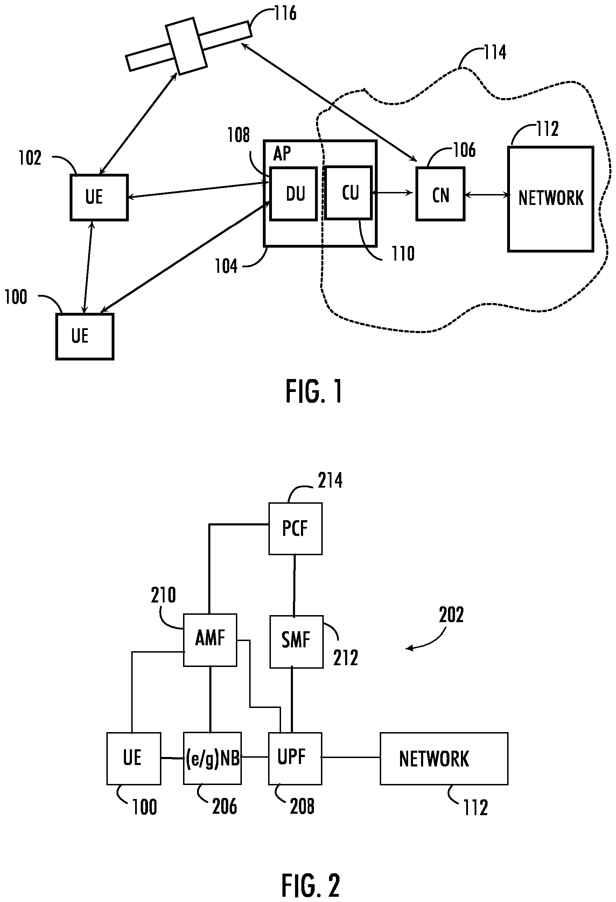

Fig. 1 shows devices 100 and 102. The devices 100 and 102 may, for example, be user devices or user terminals. The devices 100 and 102 are configured to be in a wireless connection on one or more communication channels with a node 104. The node 104 is further connected to a core network 106. In one example, the node 104 may be an access node, such as (e/g)NodeB, serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC).

The device (also called a subscriber unit, user device, user equipment (UE), user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device ( e.g. a portable or non-portable computing device) that includes wireless mobile communication devices operating with or without an universal subscriber identification module (USIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G or NR (New Radio) enables using multiple input - multiple output (MIMO) antennas, many more base stations or nodes than the Long Term Evolution, LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication 116 to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)NodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 100 communicating via a 5G network 202 with a data network 112. The user terminal 100 is connected to a Radio Access Network RAN node, such as (e/g)NodeB 206 which provides the user terminal a connection to the network 112 via one or more User Plane Functions 208. The user terminal 100 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function 214 which is configured to govern network behavior by providing policy rules to control plane functions.

The (e/g)NodeB 206 may serve the terminal devices in its coverage are by utilising a beamforming technique, where it transmits signals to the terminal devices via one or more beams. The beams may have at least partly different coverage areas. In an embodiment, a terminal device may receive a signal via more than one beam. Typically, transmission on each beam comprises a beam index. Thus, the terminal device may know which beam it is receiving. As mentioned, beams are typically created by phasing the transmitted signals and transmitting the signals via antenna arrays comprising antenna elements.

The phases of the antenna array elements may have some errors, which disturb beamforming (BF). To mitigate this, the errors are typically compensated by calibration. Using a two-antenna array beamforming radio as an example, calibration is performed by comparing the phases of the antenna ports to which antenna arrays are connected and adjusting one of them to remove the relative error. The process is repeated to all ports.

Massive MIMO (mMIMO) radios have calibrated antennas, where inside the radio units (RU) the phases of each transmitter are corrected to form a good beam towards the terminal device to maximize the received power and to optimize other characteristics according to the BF algorithms.

For non-BF radios, calibration has not been utilised. This has not been considered necessary, and the required hardware does not exist inside the antennas. However, lack of calibration causes degradation also for the non-BF radios, as explained below.

For example, remote radio heads (RRH) with an external antenna usually have no calibration. This has been considered to be good enough, because in LTE and NR a terminal device anyhow feeds back the phase difference that it prefers to have between the transmitting (TX) antennas in the Physical downlink shared channel (PDSCH) transmission. This feedback is given in a form of precoding matrix indicator (PMI) defined in NR by 3GPP in standard TS 38.214, Chapter 5.2.2.2.2. A terminal device transmits the PMI to gNB inside a channel state information element (CSI). This is similar to BF: In both cases constructive summation of radio waves is expected to happen at the receiver. The PMI is quantized according to a "codebook", which has a coarse quantization. For example, if the antenna array has two elements per polarization, their phases can be adjusted at steps of 45° only.

In NR, the PMI consist of *i1* and i2 parameters. Typically, *i1* controls spatial characteristics, i.e., the direction of the beam, and i2 is used for phase alignment between polarities. A terminal device derives the PMI using downlink (DL) reference signals (CSI-RS), which are transmitted by the gNB independently from each antenna port. In an embodiment, the antenna ports may be the same as physical antennas. Therefore, a terminal device can measure the TX phase difference of the physical RRH antennas.

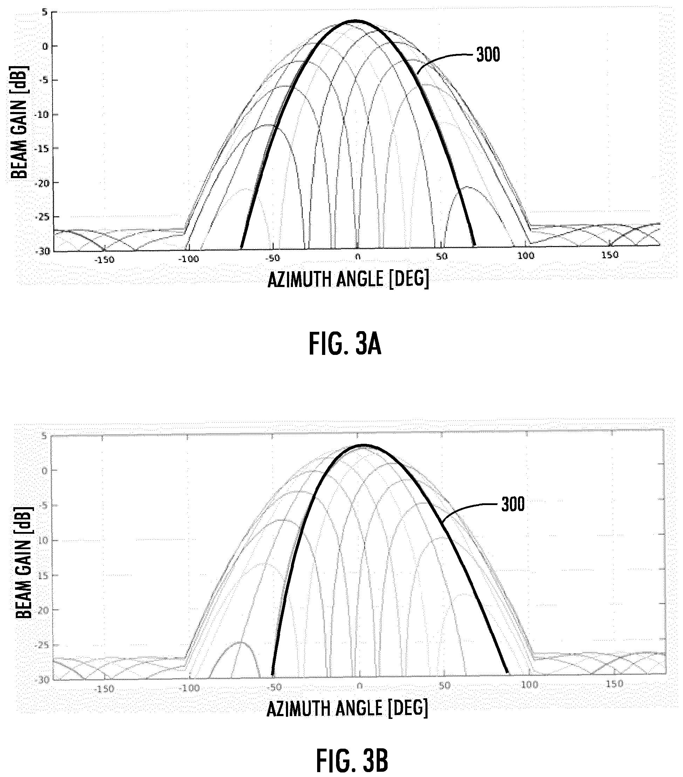

Figure 3A demonstrates an example of the beam patterns of a 4 transmission antenna / 4 receiving antenna, or 4T4R antenna, according to 3GPP TS 38.214, Chapter 5.2.2.2.2 . Here an inter-element distance is assumed to be 0.5 wavelengths and there are no calibration errors. The beam 300 corresponding to i1=0 is highlighted.

As there has not been any calibration in RRHs, there is no correspondence between phase difference of the array elements and the physical direction where the TX beam of the signal is pointing to. When only one polarity is utilised in the transmission, it is sufficient as PMI may be used: the i1 parameter directs the beam well enough towards the terminal device without needing to know its physical direction. The PMI beams which are illustrated in Figure 2 without calibration errors, will undergo a cyclic permutation. They still cover the same angular range, but the direction of a single beam is arbitrary. This is demonstrated in Figure 3B, the beam 300 corresponding to i1=0 again highlighted.

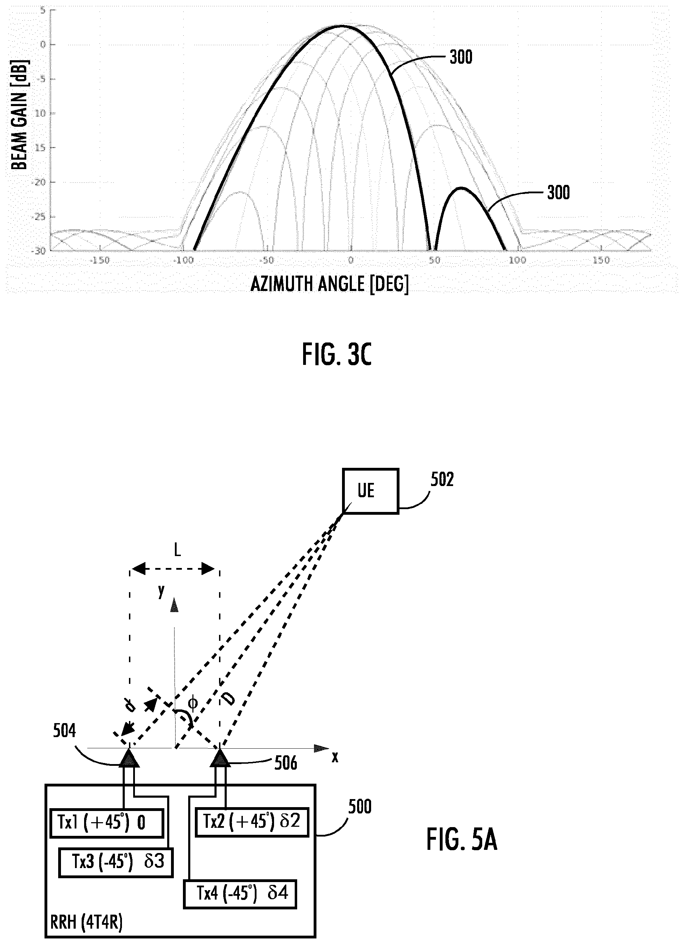

The use of PMI is sufficient when only one polarity is used in the transmission to the terminal device. Due to lack of calibration the beam direction, which is controlled by the i1 parameter, can be arbitrary. When two polarities are used in the transmission, the beam directions may also be differing quite much between the two polarities. In other words: the beam on one polarity can be pointing towards completely different direction than the beam on another polarity. Another illustration of the impact of a calibration error is shown in Figure 3C.

Thus, it may be that only on one polarity the PDSCH beam is pointing towards the terminal device. This will degrade the PDSCH signal seen by the terminal device - both power and the possibility to transmit uncorrelated MIMO layers will be compromised. To prevent this kind of situation, an i1 parameter specific to polarization should be used. However, the NR Type I codebook doesn't allow this. Another solution would be to perform calibration, so that it could be guaranteed that the beams on both polarities are directed towards the same direction. Calibration as performed in mMIMO radio units requires hardware, which most RRHs lack. Therefore, extra information is needed about the phase differences of TRXs.

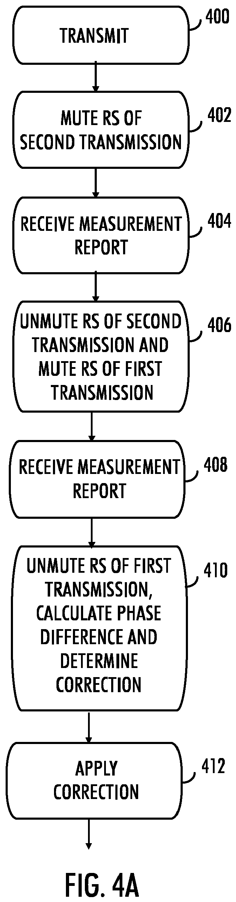

The flowchart of Fig. 4A illustrates an embodiment of a calibration process which can be performed without specific hardware. The flowchart illustrates an example of an embodiment applied at a network element apparatus. In an embodiment, the apparatus may be a (e/g)NodeB or an access point, or a part of a (e/g)NodeB or an access point, for example. In an embodiment, the apparatus utilises a 4T4R antenna system.

In step 400, the apparatus is configured to transmit to a terminal device a first transmission with first polarization utilising a first set of antenna elements and a second transmission with second polarization utilising a second set of antenna elements, each transmission comprising a reference signal.

In step 402, the apparatus is configured to mute the reference signal of the second transmission.

In step 404, the apparatus is configured to receive a measurement report from the terminal device, the measurement report comprising first phase offset information regarding the first set of antenna elements.

Thus, the apparatus temporary mutes the DL reference signals of the second polarization to derive from the terminal device a measurement report, such as a channel state information CSI report, comprising the phase offsets between the apparatus's transmissions of the first polarization, as received by the terminal device.

In step 406, the apparatus is configured to unmute the reference signal of the second first transmission and mute the reference signal of the first transmission.

In step 408, the apparatus is configured to receive a measurement report from the terminal device. The measurement report comprises second phase offset information regarding the second set of antenna elements.

Thus, the apparatus temporary mutes the DL reference signals of the first polarization to derive from the terminal device a measurement report, such as a channel state information CSI report, comprising the phase offsets between the apparatus's transmissions of the second polarization, as received by the terminal device.

In step 410, the apparatus is configured to unmute the reference signal of the first transmission and calculate the differential of the first and second phase offset information and determine a phase shift correction based on the differential.

In step 412, the apparatus is configured to adjust the phase offsets of the transmissions to be the same by applying a phase shift correction to the first or second set of antenna elements.

Thus, based on the information from the relative phase offsets between the first and second polarization transmissions and applying a phase shift correction accordingly to one or more transmissions it is possible to control the beams of the different polarisations to point to the same direction.

In an embodiment, the above muting, receiving and adjusting may be performed at given time intervals.

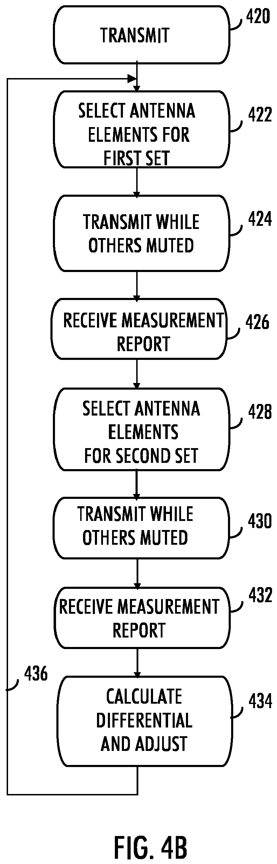

The above implementation example of Fig. 4A was derived for 4T4R RRH antenna system. However, embodiments of the invention may also be applied to any other type of RRH which uses a uniform linear antenna array (ULA) with equal spacing between the antenna elements, and the RRH + antenna is not equipped by a calibration circuitry, for example. The flowchart of Fig. 4B illustrates an embodiment of a calibration process which can be performed without specific hardware. In an embodiment, the apparatus utilises 8T8R antenna system, for example but is not limited to it.

In step 420, the apparatus is configured to control a given number of antenna elements for transmitting to a terminal device, the antenna elements being located in a given number of columns with two antennas per column.

In step 422, the apparatus is configured to select two antenna elements located in different columns as a first set of antenna elements.

In step 424, the apparatus is configured to transmit to the terminal device a first transmission utilising the first set of antenna elements, the transmission comprising a reference signal while muting reference signals of the transmissions of other antenna elements.

In step 426, the apparatus is configured to receive a measurement report from the terminal device, the measurement report comprising first phase offset information regarding the first set of antenna elements.

In step 428, the apparatus is configured to select two antenna elements of the given number of antenna elements located in different columns as a second set of antenna elements.

In step 430, the apparatus is configured to transmit to a terminal device a second transmission utilising the second set of antenna elements, the transmission comprising a reference signal while muting reference signals of the transmissions of other antenna elements.

In step 432, the apparatus is configured to receive a measurement report from the terminal device, the measurement report comprising second phase offset information regarding the second set of antenna elements.

In step 434, the apparatus is configured to calculate differentials between the obtained phase offset information and determine and adjust the phase offsets of the transmissions to be similar by applying a phase shift correction to an antenna of the second set of antenna elements based on the differentials.

The apparatus is configured to perform 436 the above transmitting, muting, receiving, calculating and adjusting the sets of antenna elements one at a time.

In an embodiment, the first and second set of antenna elements may comprise a common antenna element.

Applying the proposed solution, the RRC reconfiguration is not needed, the procedure can be performed fast and in short time avoiding risk for quality drops or significant throughput degradation.

It may be noted that the proposed solution is applicable to both time division multiplexing (TDD) and frequency division multiplexing (FDD) systems, but it is specifically relevant to FDD where the UL-DL channel reciprocity cannot be used to support RF calibration.

The RF calibration procedure explained above mentions CSI feedback from terminal device(s). However, the solution is not limited to CSI messages, but measurement results can be sent without CSI context as well. After the procedure the beams for the two polarizations will point approximately to the same directions which will help all terminal devices using DL MIMO in the cell to receive higher total signal strength over the two polarizations, when selecting the best beams by 3GPP 38.214 ch. 5.2.2.2, four port, closed loop MIMO precoding, for example. The proposed solution is not limited to any particular number of antennas or antenna elements.

Let us study the setup according to the Fig.5A. The figure illustrates an example where a remote radio head, RRH, 500 with four transmission antennas Tx1, Tx2, Tx3 and Tx4 are used. A terminal device 502 is expected to hear the signal from 4 Tx antennas Tx1, Tx2, Tx3 and Tx4. The antennas Tx1 and Tx2 are used for one polarity and antennas Tx3 and Tx4 are used for another polarity. Tha antennas Tx1 and Tx3 are in one column 504 and antennas Tx2 and Tx4 in another column 506 with a spatial horizontal distance L between the columns. The terminal device 500 is located at a distance D from the antenna with angle Φ from antenna boresight. In a typical situation D»L.

Typically, the polarity of antennas 1 and 2 is orthogonal to the polarity of antennas 3 and 4, and the geographical position of the antennas 3 and 4 are same as antennas 1 and 2 respectively. Thus, in an embodiment, the set of antenna elements are arranged corresponding to NR Type I Single panel codebook. In an embodiment, by this arrangement the antennas 1, 2, 3 and 4 correspond to NR Type I Single panel codebook ports {3000,3001,3002,3003} respectively, as 3GPP TS 38.214 ch. 5.2.2.2 describes.

Let us consider one strong path towards the terminal device 502. The path directions in the channel typically are the same on both polarizations.

In an embodiment, the selected terminal device is in line-of-sight and more than 10 m away from the set of antenna elements. Thus, the distance between the terminal device 502 and the gNB 500 antennas, D, can be assumed to be large enough for far-field approximation such that the path distance difference $d$ from antennas Tx1 and Tx2 to terminal device 502 only depends on column distance L and the angle $\Phi$ between boresight of the antenna and the line from the antennas to the terminal device location, see Fig. 5A:

$$d = L \cdot \sin(\Phi) \qquad (1)$$

Let us define $\delta_2$, $\delta_3$ and $\delta_4$ as the base station's 500 phase calibration offsets relative to Tx1. It is to be noted that these offsets cannot be directly measured due to lack of calibration circuitry in the RRH antenna. Furthermore, let us assume that the phase offsets $\delta_2$, $\delta_3$ and $\delta_4$ are stable, only changing very slowly if at all which is a valid assumption for typical high quality RF products.

Let us define $\delta$ as an additional phase difference between the signals which is experienced at the terminal device 502 due to distance difference d to the terminal device 502 from antennas Tx1/ Tx3 vs. Tx2/ Tx4. It is to be noted that with the far field assumption $\delta$ depends only on L, $\Phi$ and the wavelength $\lambda$ of the transmitted signal. Thus, using equation (1):

$$\delta = 2\pi \cdot d/\lambda = 2\pi \, (L \cdot \sin(\Phi))/ \lambda \qquad (2)$$

It is to be noted also that $\delta$ is the same for both polarizations whereas the actual phase differences between polarizations can be totally different at UEs before the calibration procedure, because of $\delta_2$, $\delta_3$ and $\delta_4$.

In an embodiment, the calibration procedure may be performed as follows. In this example, a four-port antenna element Tx1, Tx2, Tx3 and Tx4 is activated in the cell for DL 4x4 MIMO. Tx1/Tx2 transmit using one polarity and Tx3/Tx4 transmit using another polarity. The base station is configured to transmit four reference signals CSI-RS for Tx1, Tx2, Tx3 and Tx4 to all terminal devices in its coverage area.

Step 1: A terminal device is selected.

Step 2: The reference signal CSI-RS is muted for Tx3 and Tx4. Thus, reference signals CSI-RSs are transmitted on one polarity only, via antennas Tx1/Tx2.

Phase difference e12 between Tx1 and Tx2 at the terminal device is e12 = $\delta + \delta_2$. Therefore, the terminal device would like to adjust the phase of the second port by -e12 = $-\delta - \delta_2$ to get zero phase offset and maximum signal strength at its RX. Ideally this would be reported by the terminal device in the CSI feedback.

To avoid ambiguity in the direction $\delta$, t is possible either to select a rank 1 terminal device or configure the MIMO rank to be 1 during the procedure.

This -e12 is stored for later use.

Step 3: The same above procedure is repeated for Tx3 and Tx4. First, the CSI-RS transmission in Tx1 and Tx2 is muted.

The phase difference e34 between Tx3 and Tx4 at the terminal device is determined as e34 = $\delta + \delta_4 - \delta_3$. => -e34 = $-\delta - \delta_4 + \delta_3$.

This -e34 is stored for later use.

Step 4: The value of e = e12-e34 is calculated from the estimates obtained in Step 2 and Step 3. Thus, the difference of calibration errors on the two different polarities is obtained.

$$e = e12\text{-}e34 = (\delta + \delta_2) - (\delta + \delta_4 - \delta_3) = \delta_2 - \delta_4 + \delta_3. \qquad (3)$$

It is to be noted that the above value e in equation (3) is independent of the direction of the terminal device, because $\delta$ is the same for both polarizations and therefore vanishes from the equation.

Step 5: The obtained phase correction e12-e34 is applied in this example to Tx4 to all channels, including CSI-RSs. This can be done, for example, by modifying all Tx4 multipliers in all pre-coding matrices at the baseband unit by adding e12-e34 additional phase offset to Tx4.

As a result the phase offset at Tx4 after the adjustment is $\delta_{4,new} = \delta_4 + \delta_2 - \delta_4 + \delta_3 = \delta_2 + \delta_3$. Because Tx3 has the phase error of $\delta_3$, the residual phase error at Tx4 after the adjustment, compared to Tx3 is $(\delta_2 + \delta_3) - \delta_3 = \delta_2$. But as defined before, $\delta_2$ is the offset of Tx2 relative to Tx1.

Thus, the result of calibration procedure is that the phase offsets between the Tx1 and TX2 and between Tx3 and Tx4 are the same. Therefore, the beams at both polarities will point to the same direction.

In this example, the described procedure has calibrated the TXs at gNB transmission to have same phase offset $\delta_2$ between Tx1 and Tx2 for one polarization and the same phase offset $\delta_2$ between Tx3 and Tx4 for the other polarization as well. That means that the spatial beams 0,...,7 according to $i11$ of the 3GPP 4-port codebooks point to the same direction for both polarizations. The beam number 0 direction depends then on $\delta_2$ whereas with zero phase offsets the beam would point to boresight. However, the phase offsets of the TXs do not change the coverage span of the full set of beams, see Figs. 3A, 3B and 3C, and do not make inter-beam interference worse for the full set of beams 0,...,7. The applied indexing does not matter.

In above example, an optimal phase offset feedback from a single terminal device was assumed. This would lead to optimal calibration. However, in practise this is not a correct assumption since already the quantization of the spatial phase offset correction values in 3GPP Type-1 4-port codebook is 45 degrees. It means that the maximum error due to quantization of a single feedback from the terminal device would be 45°/2, and above it is done two times per terminal device, the worst case would produce still 45° error.

In an embodiment, the accuracy of the procedure can be greatly improved by utilising more than one terminal device in the process. The above procedure may be repeated for several terminal devices and the results obtained with the terminal devices may be averaged. Thus, e = e12-e34 from the Step 4 above may be determined and stored for a given number N of terminal devices during a single, or during several data collection intervals. After the given number N of values e have been obtained and an average value $\overline{e}$ may be calculated. The Tx4 phase may be adjusted according to Step 5 by the average $\overline{e}$ of the e values. By that the phase offset at Tx4 would converge to the actual $\delta_2 - \delta_4 + \delta_3$ with growing N.

It is also possible that for a terminal device which is in a not-line-of-sight (NLOS) situation, the direction $\Phi$ may be ambiguous. This can be detected when the calculation is repeated for several terminal devices, and the clear outliers may be discarded before averaging the results.

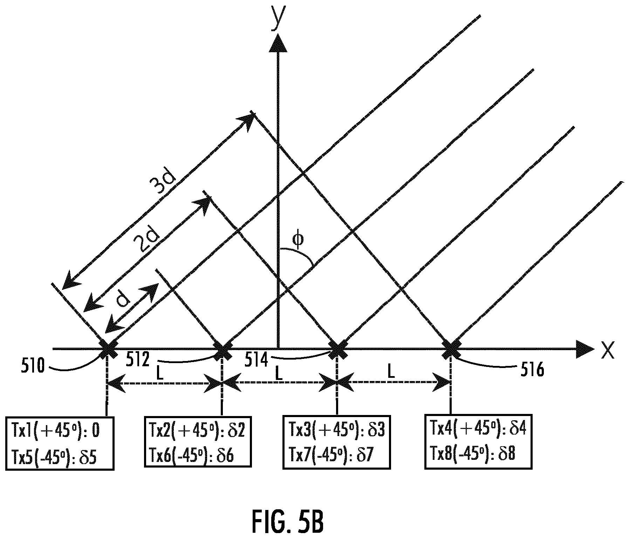

The above implementation example of Fig. 5A was derived for 4T4R RRH antenna system. However, embodiments of the invention may also be applied to any other type of RRH which uses a uniform linear antenna array (ULA) with equal spacing between the antenna elements in a linear array, and the RRH + antenna is not equipped by a calibration circuitry, for example. For example, the antenna elements can be planar antenna columns with two polarizations per each column. Fig. 5B illustrates another example, where the antenna system is equipped with 4 columns 510, 512, 514 and 516 and on each column two polarizations are applied. Thus, the antenna system is fed by eight input/output signals from an 8T8T RRH. Even if in case the RRH and antenna does not have a calibration hardware, it can still be used for some beamforming applications where the needed calibration is provided in a similar manner as explained above for the 4T4R case with two columns and polarizations.

Fig. 5B illustrates thus an example of an RRH (8Tx, 8Rx) connected to a four column 510, 512, 514, 516 uniform linear antenna array, where the distance between each column is L. The antenna pointed to positive y direction (boresight). Each antenna column has two input TXs from the RRH: One for +45 degrees polarization branch and one for -45 degrees.

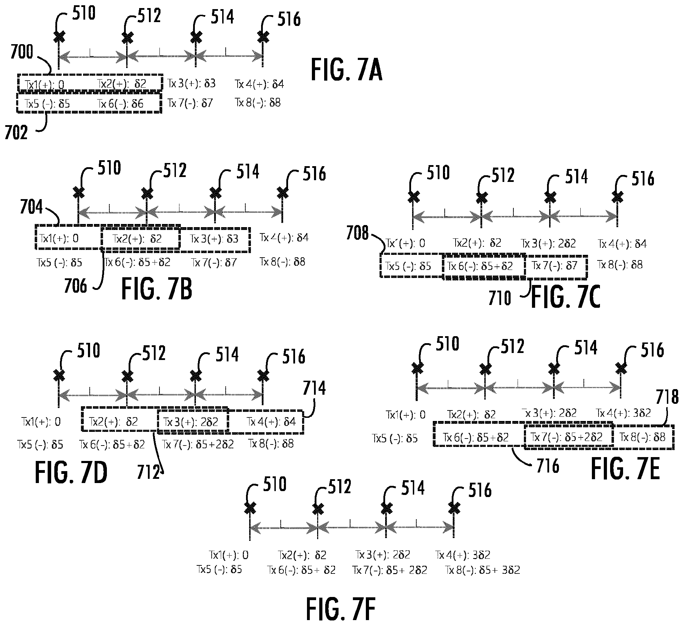

The method described above in connection with 4T4R antenna system of Fig. 5A can be applied in a similar manner to a system like in Fig. 5B. However, in an embodiment, the process may be performed iteratively. Figs. 7A to 7F illustrate an example of the iterative process.

In Fig. 7A, the above-described process is first executed for the two leftmost columns 510 and 512 of the RRH. Thus, the phase differences between the Tx1 and Tx2 of the first polarization, which form the first set 700 of antenna elements are aligned with the phase differences of Tx5 and Tx6 of the second polarization which form the second set 702 of antenna elements. Up to that point the process can be exactly the same as for the 4T4R RRH as explained before.

Next, in Fig. 7B, the phase differences between the third column 514 and second column 512 can be aligned with the phase differences between the second 512 and first 510 column, again with similar process as described earlier. However, with the difference that the first set 704 of antenna elements contains now Tx1 and Tx2 and the second set 706 of antenna set Tx2 and Tx3 for first polarization.

Next in Fig. 7C, the first set 708 of antenna elements contains Tx5 and Tx6 and the second 710 set of antenna elements Tx6 and Tx7.

Finally, the procedure is repeated in Fig. 7D having the Tx2 and Tx3 in the first set 712 of antennas and Tx3 and Tx4 in the second set 714 of antennas for first polarization and in Fig. 8E Tx6 and Tx7 being the first set 716 of antenna elements and Tx7 and Tx8 being the second set 718 of antenna elements correspondingly for the second polarization.

The process has been presented in Figs. 7A to 7F in one possible order, but the order can be changed in different realizations of the procedure. "The end-result (illustrated in Fig. 7F) after the process is that the phase offset $\delta$ between all adjacent antenna elements is similar to $\delta2$, and this applies to both polarities.

The benefit of the invention applied to the system of Figure 5B is that in case of non-RF-calibrated system of 8T8R RRH with an 8T8R antenna, a partial calibration can still be done by this method which enables usage of such system to several beam forming applications. As an example, with the proposed solution, DFT beams or oversampled DFT beams might be used as a grid-of-beams set, since the solution preserves the property of DFT beams where the TX phase difference between the adjacent antennas is kept constant.

It may be noted that the proposed solution is not limited to uniform linear antenna array, but the same principle could be applied also to other antenna systems which have a uniform geometrical structure.

The above-described calibration procedure is only relative, which means that after the procedure there still is no information on the absolute errors or terminal device directions. It only aligns the beam directions on the two polarities, making 3GPP Type I codebook more suitable for such RRHs without calibration circuitry.

In an embodiment, the reference signals CSI-RS can be sent cell specific, i.e., they may be broadcasted to all terminal devices of the cell. In an embodiment, the reference signals CSI-RS can be terminal device specific, i.e., each terminal device has its own CSI-RS signal. The described procedure can be applied with both alternatives. In the cell specific CSI-RS case, the CSI-RS muting in above Steps 2 and 3 apply automatically to all terminal devices. In that case, the averaging for improving accuracy as described above is straight forward. In case of terminal device specific CSI-RS, the CSI-RS muting can be done only for selected terminal devices so that the rest of terminal devices do not experience change in the channel conditions due to the muting.

In an embodiment, the above calibration procedure may be performed at given time intervals. For example, the procedure may be performed at the interval of several minutes. However, this is only an illustrative non-limiting example of a possible time interval.

In an embodiment, when the above calibration procedure is ongoing and the use of reference signals is temporarily impaired, the last channel state information received from the terminal devices before the muting can be used temporarily for PDSCH until all the full unmuted CSI-RSs are sent again to the terminal devices. As this calibration process is needed only relatively seldom, at an interval of several minutes for example, the negative performance impact of the muting and outdates CSI is minimal.

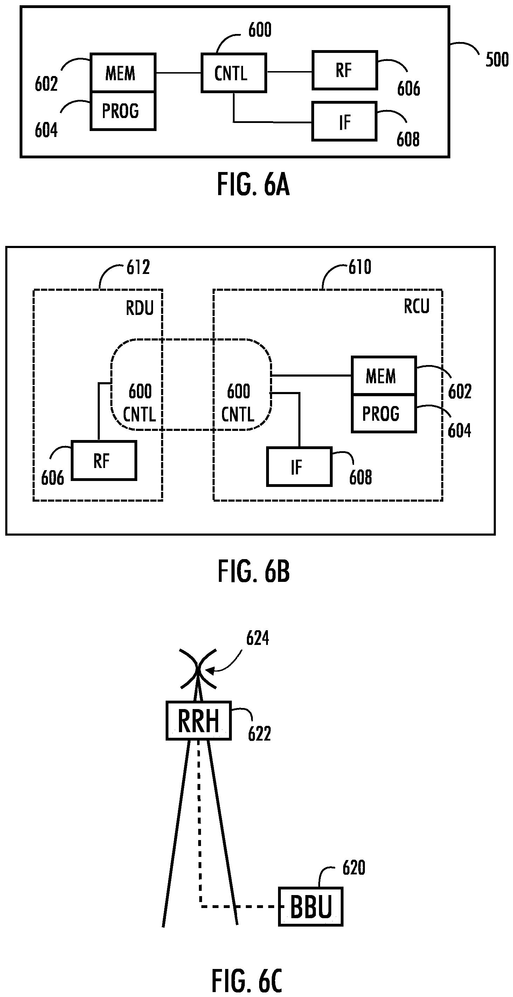

Figs. 6A, 6B and 6C illustrate embodiments. The figures illustrate simplified examples of apparatuses applying embodiments of the invention. It should be understood that the apparatuses are depicted herein as examples illustrating some embodiments. It is apparent to a person skilled in the art that the apparatuses may also comprise other functions and/or structures and not all described functions and structures are required. Although the apparatuses have been depicted as one entity, different modules and memory may be implemented in one or more physical or logical entities.

Fig. 6A illustrates an example of an apparatus which may be a base station, gNodeB 500 or a part of base station or gNodeB.

The apparatus 500 of the example includes a control circuitry 600 configured to control at least part of the operation of the apparatus.

The apparatus may comprise a memory 602 for storing data. Furthermore, the memory may store software 604 executable by the control circuitry 600. The memory may be integrated in the control circuitry.

The apparatus may comprise one or more interface circuitries 606. The interface circuitries are operationally connected to the control circuitry 600. An interface circuitry 606 may be a set of transceivers configured to communicate wirelessly with terminal devices or user equipment of a wireless communication network. The interface circuitry may be connected to an antenna arrangement (not shown). The apparatus may also comprise a connection to a transmitter instead of a transceiver. The apparatus may further comprise an interface 608 configured to communicate with other network elements such a core network or other corresponding apparatuses, for example a user interface.

In an embodiment, the software 604 may comprise a computer program comprising program code means adapted to cause the control circuitry 600 of the apparatus to realise at least some of the embodiments described above.

In an embodiment, as shown in Fig. 6B, at least some of the functionalities of the apparatus of Fig. 6A may be shared between two physically separate devices, forming one operational entity. Therefore, the apparatus may be seen to depict the operational entity comprising one or more physically separated devices for executing at least some of the described processes. Thus, the apparatus of Fig. 6B, utilizing such shared architecture, may comprise a remote control unit RCU 610, such as a host computer or a server computer, operatively coupled (e.g. via a wireless or wired network) to a remote distributed unit RDU 612 located in the (e/g)NodeB. In an embodiment, at least some of the described processes may be performed by the RCU 610. In an embodiment, the execution of at least some of the described processes may be shared among the RDU 612 and the RCU 610.

In an embodiment, the RCU 610 may generate a virtual network through which the RCU 610 communicates with the RDU 612. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RDU and the RCU. In practice, any digital signal processing task may be performed in either the RDU or the RCU and the boundary where the responsibility is shifted between the RDU and the RCU may be selected according to implementation.

In an embodiment, as shown in Fig. 6C, at least some of the functionalities of the apparatus of Fig. 6A may be shared between two physically separate devices, forming one operational entity.

The baseband parts of the apparatus may be located in a baseband unit 620 and radio frequency units may be located in a remote radio head RRH 622 which may be located near the antennas 624 the apparatus uses in transmission.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, processing system or a circuitry which may comprise a working memory (random access memory, RAM), a central processing unit (CPU), and a system clock. The CPU may comprise a set of registers, an arithmetic logic unit, and a controller. The processing system, controller or the circuitry is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

It will be obvious to a person skilled in the art that, as the technology advances, the inventive concept can be implemented in various ways. The invention and its embodiments are not limited to the examples described above but may vary within the scope of the claims.

**Claims**

1. An apparatus in a communication system, comprising means for:

controlling a given number of antenna elements for transmitting to a terminal device, the antenna elements being located in a given number of columns with two antennas per column;
selecting two antenna elements located in different columns as a first set of antenna elements;
transmitting to the terminal device a first transmission utilising the first set of antenna elements, the transmission comprising a reference signal while muting reference signals of the transmissions of other antenna elements;
receiving a measurement report from the terminal device, the measurement report comprising first phase offset information regarding the first set of antenna elements;
selecting two antenna elements of the given number of antenna elements located in different columns as a second set of antenna elements;
transmitting to a terminal device a second transmission utilising the second set of antenna elements, the transmission comprising a reference signal while muting reference signals of the transmissions of other antenna elements;
receiving a measurement report from the terminal device, the measurement report comprising second phase offset information regarding the second set of antenna elements;

calculating differentials between the obtained phase offset information and determine and adjust the phase offsets of the transmissions to be similar by applying a phase shift correction to an antenna of the second set of antenna elements based on the differentials;

performing the above transmitting, muting, receiving, calculating and adjusting the sets of antenna elements one at a time.

2. The apparatus of claim 1, further comprising means for:

transmitting to a terminal device a first transmission with first polarization utilising a first set of antenna elements and a second transmission with second polarization utilising a second set of antenna elements, each transmission comprising a reference signal;

calculating, after the muting, receiving and unmuting, phase differences of the first and second phase offset information and determine a phase shift correction based on the difference;

adjusting the phase offsets of the transmissions to be similar by applying a phase shift correction to the first and second set of antenna elements.

3. The apparatus of claim 1 or 2, further comprising means for:
performing the muting, receiving and adjusting at given time intervals.

4. The apparatus of any preceding claim, further comprising means for:

determining the differential of the first and second phase offset information with more than one terminal device;

determining the average differential of transmissions transmitted to different terminal devices;

determining an average phase shift correction based on the average differential and

adjusting the phase offsets of the transmissions to be similar by applying the average phase shift correction.

5. The apparatus of any preceding claim, wherein the reference signals are terminal device specific.

6. The apparatus of claim 4, wherein the reference signals are cell specific.

7. The apparatus of any preceding claim, wherein measurement report is a channel state information report, and the memory and the computer program code configured to, with the processor, cause the apparatus further to:
utilise channel state information received from the terminal device before the muting operation in the transmission of beams to the terminal device during the muting operation.

8. The apparatus of any preceding claim, wherein the first and second sets of antenna elements are arranged corresponding to NR Type I Single panel codebook.

9. The apparatus of any preceding claim, wherein the terminal device is in line-of-sight and more than 10 m away from the first and second sets of antenna elements.

10. A method in an apparatus in a communication system comprising the steps of:

controlling a given number of antenna elements for transmitting to a terminal device, the antenna elements being located in a given number of columns with two antennas per column;

selecting two antenna elements located in different columns as a first set of antenna elements;

transmitting to the terminal device a first transmission utilising the first set of antenna elements, the transmission comprising a reference signal while muting reference signals of the transmissions of other antenna elements;

receiving a measurement report from the terminal device, the measurement report comprising first phase offset information regarding the first set of antenna elements;

selecting two antenna elements of the given number of antenna elements located in different columns as a second set of antenna elements; transmit to a terminal device a second transmission utilising the second set of antenna elements, the transmission comprising a reference signal while muting reference signals of the transmissions of other antenna elements;

receiving a measurement report from the terminal device, the measurement report comprising second phase offset information regarding the second set of antenna elements;

calculating differentials between the obtained phase offset information and determine and adjust a phase shift correction of an antenna of the second set of antenna elements based on the differentials;
performing the above transmitting, muting, receiving, calculating and adjusting the sets of antenna elements one at a time.

**11.** The method of claim 10, further comprising:

transmitting to a terminal device a first transmission with first polarization utilising a first set of antenna elements and a second transmission with second polarization utilising a second set of antenna elements, each transmission comprising a reference signal;
calculating, after the muting, receiving and unmuting, phase differences of the first and second phase offset information and determine a phase shift correction based on the difference;
adjusting the phase offsets of the transmissions to be similar by applying a phase shift correction to the first and second set of antenna elements.

**12.** The method of claim 10 or 11, further comprising:
performing the muting, receiving and adjusting at given time intervals.

**13.** The method of any preceding claim 10 to 12, further comprising:

determining the differential of the first and second phase offset information with more than one terminal device;
determining the average differential of transmissions transmitted to different terminal devices;
determining an average phase shift correction based on the average differential and
adjusting the phase offsets of the transmissions to be similar by applying the average phase shift correction.

**14.** The method of claim 10 to 13, wherein measurement report is a channel state information report, and the memory and the computer program code configured to, with the processor, cause the apparatus further to:
utilise channel state information received from the terminal device before the muting operation in the transmission of beams to the terminal device during the muting operation.

**15.** The method of claim 10 to 14, wherein the first and second sets of antenna elements are arranged corresponding to NR Type I Single panel codebook; and
wherein the terminal device is in line-of-sight and more than 10 m away from the first and second sets of antenna elements.

**FIG. 1**

**FIG. 2**

**FIG. 3A**

**FIG. 3B**

FIG. 3C

FIG. 5A

FIG. 5B

FIG. 4A

FIG. 4B

**FIG. 6A**

**FIG. 6B**

**FIG. 6C**

510 512 514 516

700

Tx1(+): 0   Tx2(+): δ2   Tx 3(+): δ3   Tx 4(+): δ4
Tx5 (-): δ5   Tx 6(-): δ6   Tx 7(-): δ7   Tx 8(-): δ8

702

**FIG. 7A**

510 512 514 516

704

Tx1(+): 0   Tx2(+): δ2   Tx 3(+): δ3   Tx 4(+): δ4
Tx5 (-): δ5   Tx 6(-): δ5+δ2   Tx 7(-): δ7   Tx 8(-): δ8

706

**FIG. 7B**

510 512 514 516

708

Tx1(+): 0   Tx2(+): δ2   Tx 3(+): 2δ2   Tx 4(+): δ4
Tx5 (-): δ5   Tx 6(-): δ5+δ2   Tx 7(-): δ7   Tx 8(-): δ8

710

**FIG. 7C**

510 512 514 516

714

Tx1(+): 0   Tx2(+): δ2   Tx 3(+): 2δ2   Tx 4(+): δ4
Tx5 (-): δ5   Tx 6(-): δ5+δ2   Tx 7(-): δ5+2δ2   Tx 8(-): δ8

712

**FIG. 7D**

510 512 514 516

718

Tx1(+): 0   Tx2(+): δ2   Tx 3(+): 2δ2   Tx 4(+): 3δ2
Tx5 (-): δ5   Tx 6(-): δ5+δ2   Tx 7(-): δ5+2δ2   Tx 8(-): δ8

716

**FIG. 7E**

510 512 514 516

Tx1(+): 0   Tx2(+): δ2   Tx 3(+): 2δ2   Tx 4(+): 3δ2
Tx5 (-): δ5   Tx 6(-): δ5+ δ2   Tx 7(-): δ5+ 2δ2   Tx 8(-): δ5+ 3δ2

**FIG. 7F**

Europäisches
Patentamt

European
Patent Office

Office européen
des brevets

# EUROPEAN SEARCH REPORT

**Application Number**

EP 25 15 1225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/267853 A1 (HUAWEI TECH CO LTD [CN]) 29 December 2022 (2022-12-29) * the whole document * -& US 2024/154706 A1 (GUO SENBAO [CN] ET AL) 9 May 2024 (2024-05-09) * paragraph [0085] * * paragraph [0090] - paragraph [0092]; figure 2 * * paragraph [0117]; figure 6 * * paragraph [0141] - paragraph [0155]; figure 8 * * claim 1 * ----- | 1-15 | INV. H04B7/06 H04B7/10 H04B17/12 ADD. H04B7/0456 |

TECHNICAL FIELDS
SEARCHED        (IPC)

H04B

The present search report has been drawn up for all claims

| Place of search | Date of completion of the search | Examiner |
|---|---|---|
| Munich | 21 May 2025 | Sieben, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

**EP 4 589 860 A1**

## ANNEX TO THE EUROPEAN SEARCH REPORT
## ON EUROPEAN PATENT APPLICATION NO.

EP 25 15 1225

21-05-2025

| Patent document cited in search report | Publication date | Patent family member(s) | | Publication date |
|---|---|---|---|---|
| WO 2022267853 A1 | 29-12-2022 | CN | 115515153 A | 23-12-2022 |
| | | EP | 4319253 A1 | 07-02-2024 |
| | | US | 2024154706 A1 | 09-05-2024 |
| | | WO | 2022267853 A1 | 29-12-2022 |
| US 2024154706 A1 | 09-05-2024 | CN | 115515153 A | 23-12-2022 |
| | | EP | 4319253 A1 | 07-02-2024 |
| | | US | 2024154706 A1 | 09-05-2024 |
| | | WO | 2022267853 A1 | 29-12-2022 |

EPO FORM P0459

For more details about this annex : see Official Journal of the European Patent Office, No. 12/82